# EUROPEAN PATENT SPECIFICATION

(11) **EP 2 492 671 B1**
(45) Date of publication and mention of the grant of the patent: **06.05.2015**
(21) Application number: 11156216.1
(22) Date of filing: 28.02.2011
(51) Int. Cl.: G01N 25/72

(54) **Method of detecting wrinkles in a fiber reinforced laminated structure**
Verfahren zur Erkennung von Falten in einer faserverstärkten beschichteten Struktur
Procédé pour détecter des plis sur une structure stratifiée renforcée par fibres

(43) Date of publication of application: 29.08.2012
(73) Proprietor: Siemens Aktiengesellschaft, 80333 München (DE)
(72) Inventor: Nielsen, Per, 9310, Vodskov (DK)

(56) References cited:
- US-A- 5 374 122
- US-A- 6 000 844
- US-A1- 2006 274 812
- US-A1- 2008 304 539
- US-B2- 7 119 338
- SUGIMOTO S ET AL: "A study on nondestructive inspection for VaRTM composite wing structure", ICCM INTERNATIONAL CONFERENCES ON COMPOSITE MATERIALS - PROCEEDINGS OF THE 16TH INTERNATIONAL CONFERENCE ON COMPOSITE MATERIALS, ICCM-16 - "A GIANT STEP TOWARDS ENVIRONMENTAL AWARENESS: FROM GREEN COMPOSITES TO AEROSPACE" 2007 INTERNATIONAL COMMITTEE, 2007, XP000002657708,

## Description

The present invention relates to a method of detecting wrinkles in fibre reinforced laminated structure in which the wrinkles are detected from temperature anomalies found in this structure.

The structural characteristics of fibre reinforced laminated structures are usually governed by the amount, type and orientation of the reinforcement fibres. Typically, the stiffness and strength of fibres can only be taken into account to the extent that loading occurs in the longitudinal fibre direction. Therefore, a traditionally design assumes that the fibres of the finished laminate will be oriented in the same direction as the direction of the fibres when placed in the mould. However, in some cases wrinkles in the fibre layers may occur as a result of the manufacturing process. In such cases the wrinkled fibres no longer have the desired orientation and overload of the laminate may be the result.

Wrinkles may occur for a number of reasons. The thermal expansion of a laminate during curing may exceed the thermal expansion of the mould, in which case the laminate may come under compressive pressure before the matrix material, typically a thermoplastic or thermosetting material, is cured sufficiently to maintain the fibres in the desired orientation. Uneven structures underneath the laminate or undulations in the surface on which the laminate is built up may also lead to wrinkles.

Wrinkles in fibre reinforced laminates are typically prevented by a combination of arrangements. The laminate thickness is kept below certain limits in order to minimize exothermal heat generation. Moulds and other surfaces on which the laminate is built up are maintained at a high quality. Curing is carried out at carefully controlled temperature gradients so as to minimize differences in the thermal expansion.

Another method of avoiding wrinkles in the fibre layers consists of including layers of wrinkles-preventing material between the fibre layers. Wrinkle-preventing material is manufactured in such a way that it is stiffer than normal fibre material. When positioned between layers of, for example, fibre glass mats, the fibre in the mats are largely prevented from wrinkling, because the mats are kept flat by the wrinkle-preventing material. Such a method is, for example, described in EP 2 113 373 A1 and the documents cited therein. The wrinkle-preventing material can be a pre-cured solid, perforated, mesh-like laminate or a solid, perforated or mesh-like material other than a laminate, for example wood or metal.

If wrinkles occur in fibre reinforced laminates despite preventive action, repair or rejection of the laminate will usually be required, as the loss of stiffness and/or strength in wrinkles will often exceed any realistic safety margins.

Various methods of non-destructive detection of defects in structures are, for example, known from EP 0 304 708 A2. In particular, this document describes detecting defective portions on the inner side of a pipe by heating or cooling the pipe and measuring temperature differences produced between a portion of the outer surface of the pipe corresponding to an accumulation of foreign matters (on the inside of the wall) or corresponding to a reduced wall thickness and a portion of the outer surface corresponding to a normal wall thickness without accumulated foreign matters.

Thermal testing methods for testing wind turbine rotor blades are also known for example from WO 03/069324 A1. This document discloses a method and an apparatus of inspecting the quality of a wind turbine blade which includes a blade shell of a fibre reinforced polymer and areas to which a fluid or viscous curable polymeric compound has been supplied. The wind turbine blade is exposed to heat or cold and the temperature variations are measured over an area of the surface of the wind turbine blade. Those parts of the area with insufficient presence of the polymer are determined by their temperature difference to those parts containing sufficient polymer.

US 2008/0304539 A1 describes electromagnetically heating a conductive medium in a composite aircraft component. By heating the component, wrinkles, cracks, and other defects or damages may be found by inducing eddy currents into the composite by the electromagnetic heating.

US 7,119,338 B2 describes a translatable ultrasonic thermography inspection apparatus and a corresponding method. In this document, a translation frame is described which aims to increase the speed for survey use of an ultrasonic thermography apparatus in the analysis and inspection of the structural integrity of metal or composite structures, in particular airplane components. Heating of the structure under test is done through vibrations induced inside the structure by means of ultrasonic pulses. The transducer used for introducing the ultrasonic pulses into the structure under test is located at the translation frame. According to one embodiment, the frame can be moved along guide rails by means of a positioning motor. During operation, the transducer is prevented from bouncing and/or sliding along the specimen.

S. Sugimoto et al. "Study on non-destructive inspection for VARTM composite wing structures", ICCM International Conferences on Composite Materials - Proceedings of the 16th International Conference on Composite Materials, ICCM-16 - "A giant step towards environmental awareness: from green composites to aerospace", 2007 International Commitee, 2007 describe the use of pulsed thermography for detecting voids, delaminations and retained foreign material in a lower airplane wing panel laminated structure. Wrinkles are detected by mechanical tests.

US 6,000,844 describes detecting flaws in laminated structures by moving a heat source and a thermal imager together at a constant rate. In an instrumental setup, the thermal imager is fixed behind the heat source by a portable member which is capable of being fixed at a variety of distances. Movement of the heat source and the thermal relative to the laminated structure under test is done by means of a scanning table.

With respect to the mentioned prior art it is an objective of the present invention to provide an advantageous method of detecting wrinkles in a fibre reinforced laminated structure.

The objective is solved by a method of detecting wrinkles in a fibre reinforced laminated structure as claimed in claim 1. The depending claims contain further developments of the invention.

In the inventive method of detecting wrinkles in a fibre reinforced laminated structure the structure is locally heated or cooled with the location of the heating or cooling being moved along a defined path. Heating or cooling is performed from the outside of the structure. Advantageously, the distance between the heating or cooling equipment to the surface to be heated or cooled may be kept constant during the movement along the defined path. The temperature of the structure is measured at a measuring location being different from the location of the heating or cooling. The measuring location is moved along the same path as the location of the heating or cooling. Like the heating or cooling, measuring the temperature of the structure may, in particular, be done from the outside of the structure. Wrinkles are detected from temperature anomalies found along the path along which the measuring location is moved.

According to the invention, at least two paths are used along which the location of the heating or cooling and the measuring location are moved. The paths can be passed after each other or simultaneously, if more than one heating or cooling device and more than one measuring device are present or the heating device and the measuring device allow simultaneous heating or cooling and simultaneous measuring along a line.

The present invention is based on the issue that when the fibre laminate is heated or cooled for a specific and well defined amount of time, the temperature which the material reaches is dependent on the material properties such as the thermal conductivity, and so is the time it takes for the material to return to ambient temperature. Therefore a variation in material properties of the laminate can be measured, e.g. by measuring the surface temperature along the path at a specified time after heating or cooling the surface.

Hence, measuring the temperature at a location different to the location of heating or cooling and moving both locations along the same path allows for easily detecting anomalies in the temperature distribution of the surface of the structure, in particular if the measuring location is moved with a fixed distance to the location of the heating or cooling. Moreover, it is advantageous if the location of the heating or cooling and/or the measuring location is/are moved with a constant speed. By moving with a constant speed the thermal influence is the same at each location of the path. If the distance between the location of the heating or cooling and the measuring location is kept constant the influence of the temperature source on the measurement equipment is also the same all the time. In particular, if the distance is fixed and the speed of the movement is constant, it can be assured that the temperature measurement is performed under the same conditions at each location of the path. In this case artefacts due to the measurement set up can be minimized. Furthermore, exact knowledge of parameters of the fibre reinforced material such as, for example, thermal conductivity, heat coefficient, etc. is not necessary. With constant speed and fixed distance between the heating or cooling equipment and the measuring equipment measurements at all locations of the path are directly comparable without taking into account the time that has passed between the thermal influence and the measurement and the amount of thermal influence a specific location has experienced since these two parameters are the same for each measuring location.

As a consequence the inventive method allows a very accurate scanning of the laminate structure. Moreover, the result of the method is reproducible. If the thermal properties of the fibre reinforced material are known it may even be possible to detect the extend of the wrinkling.

To not only detect wrinkles but also detecting the length of the wrinkles the location of the heating or cooling and the measuring location can be moved along at least two different parts. From the temperature anomalies found along the at least two paths the length of a wrinkle can be determined. The number of and the distance between the paths can be set depending on the spacial resolution to be achieved for detecting the length of the wrinkles. In particular, all paths may be parallel to each other.

An auxiliary device for performing a thermal scan of a fibre reinforced laminated structure comprises a rail, a thermal transmitter and a thermal receiver which both are movable along the rail with a distance to each other. The auxiliary device further comprises a fixing means for fixing the rail at the fibre reinforced laminated structure at which the thermal scan is to be performed.

Using the auxiliary device allows for easily moving the thermal transmitter and a thermal receiver accurately along the same defined path for performing the inventive method.

A fixed distance between the thermal transmitter and the thermal receiver is easily provided if both are fixed to a common carrier that is movable along the rail. In particular, the distance between the transmitter and the receiver may be settable which allows to adapt the distance to specific properties of the structure to be examined.

If the location and/or orientation of the rail with respect to the fixing means is settable the auxiliary device allows for scanning along different paths without the need of dismounting the device from the structure and remounting it in a different position. A settable location and/or orientation can, for example, be achieved if the fixing means comprises feet and the rail comprises a first end and a second end, where at each end at least one foot is present. The at least one foot at each end is connected to the respective end by at least one movable arm. Hence, the location and/or orientation of the rail may be set by moving the arms. In particular, the at least one foot at each end may be connected to the respective end by at least two movable arms which form a four bar link together with a section of the rail and a section of the foot.

For easily attaching a detaching the auxiliary device to the structure to be examined each foot may comprise at least one suction disc.

The thermal transmitter used in the auxiliary device may be a gas nozzle, e.g. in form of cool air blower, a CO₂-nozzle, etc., or may be a heat source like, for example, a hot air blower, a heating lamp, etc.

Further features, properties and advantages of the present invention will become clear from the following description of embodiments in conjunction with the accompanying drawings.
- Figure 1: shows a wind turbine rotor blade having a wrinkle in the laminated structure together with two exemplary paths used for determining the presence of the wrinkle.
- Figure 2: schematically shows how to perform the inventive method.
- Figure 3: schematically shows a measurement results obtained by the inventive method.
- Figure 4: shows an auxiliary device used for carrying out the inventive method.
- Figure 5: shows the auxiliary device of Figure 4 fixed to a wind turbine rotor blade and a first inspection path.
- Figure 6: shows the auxiliary device as shown in Figure 5 but and a second inspection path.

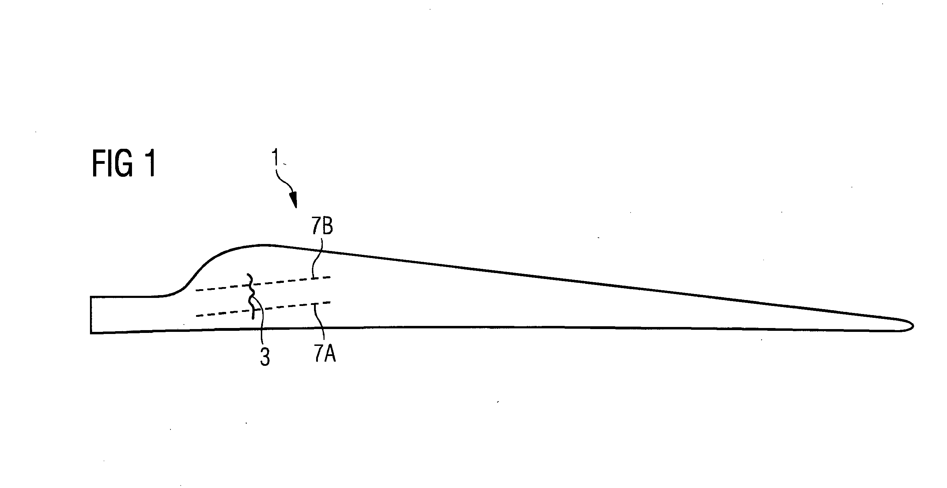

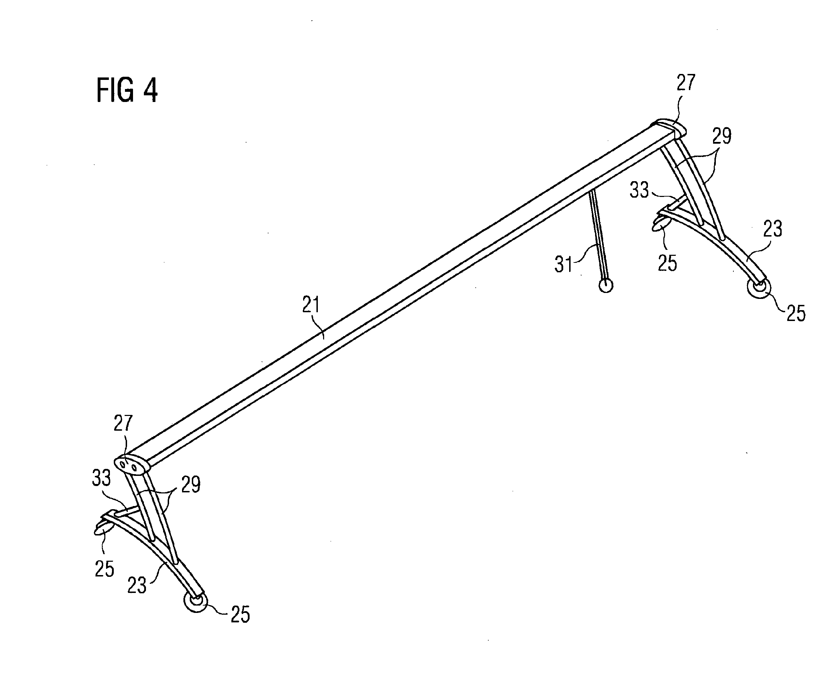

In the following, the inventive method will be described with respect to Figures 1 to 3 while an auxiliary device used for carrying out the method will be described with respect to Figures 4 to 6.

Figure 1 shows a wind turbine rotor blade 1 which is made of a fibre reinforced laminated structure. This rotor blade is to be tested for the presents of wrinkles in the laminate. Let's assume that a wrinkle 3 would be present in the area where the rotor blade 1 has its shoulder 5.

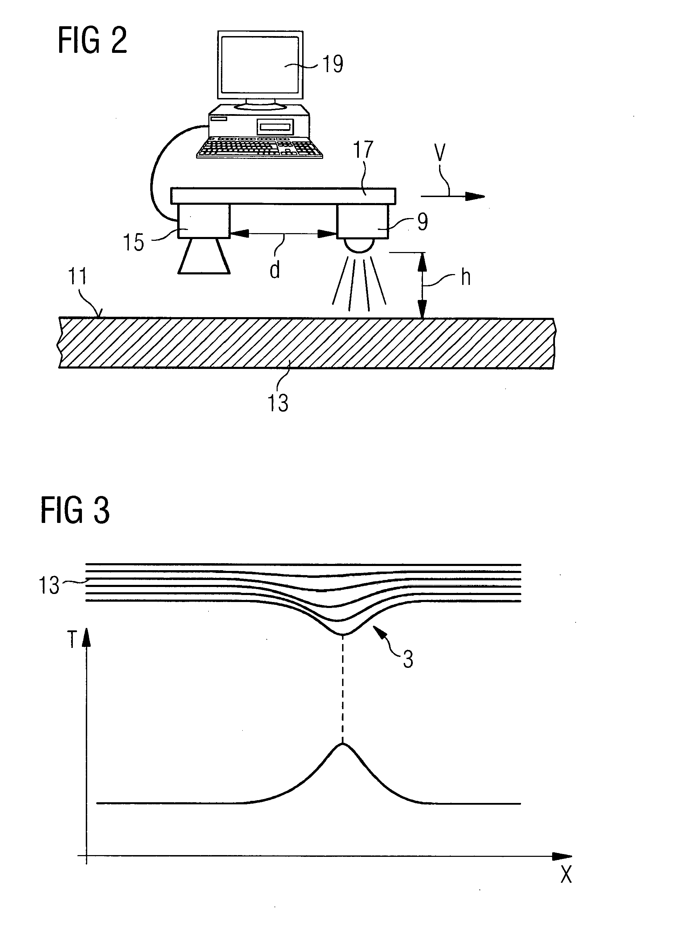

In order to detect possible wrinkles the rotor blade is at least inspected in areas where the laminated structure is known to be prone to the formation of wrinkles. Since wrinkles typically have a longitudinal extension, like it is shown in Figure 3, it can be sufficient to inspect the rotor blade along a single path which intersects the wrinkles. In order not to overlook wrinkles it may however be desirable to inspect the blade along two or more paths which are close enough to each other to ensure that no wrinkles are over-looked. Two exemplary inspection paths 7A, 7B indicated by dotted lines are shown in Figure 1. By using a sufficient number of preferably parallel inspection path 7 the longitudinal extension of a wrinkle can also be determined. The resolution by which the length of the wrinkle can be determined depends on the distance between the inspection path 7 and the spacial resolution of the measuring equipment. According to the inventive method, any wrinkles 3 intersecting at least one of the paths 7A, 7B will be detected.

According to the method, a thermal transmitter 9 is moved over the surface 11 of the blade laminate along an inspection path 7 (see Figure 2). The movement is carried out with a constant velocity v and a constant height h of the thermal transmitter 9 above the laminate surface 11. The thermal transmitter 9 may either heat or cool the laminate 13. In the present embodiment, the thermal transmitter 9 is a filament lamp for heating the laminate. However, other heating means like, for example, a hot air blower may be used instead the filament lamp. On the other hand, the thermal transmitter does not necessarily need to heat the laminate. It could as well cool it. In this case, the thermal transmitter would be, for example, a cool air blower or a CO₂-nozzle blowing a respective cooled gas onto the laminate surface 11.

At a fixed distance d to the thermal transmitter 9, a thermal receiver 15 is moved over the laminate surface 11 along the same inspection path 7 as the thermal transmitter 9. In the present embodiment a coupled movement with a fixed distance d is simply achieved by mounting the thermal transmitter 9 and the thermal receiver 15 on the same carrier 17. The carrier 17 may, for example, be movable along a rail of an auxiliary device, as will be explained later.

The thermal receiver 15 moving along the same inspection path 7 as a thermal transmitter 9 measures the temperature of the laminate surface 11 along this path. The thermal receiver can be realised by any kind of pyrometer, either single spot or a spacially resolving. The temperature data measured by the thermal receiver 15 is then processed and displayed on a monitor, e.g. of a computer 19.

The analysis of the temperature data in order to detect wrinkles can be kept very simple. In case of, for example, a single spot pyrometer used as thermal receiver 15 one would obtain a temperature distribution along the path 7 as shown in Figure 3. This Figure is a diagram where the abscissa shows the distance of the location of a temperature measurement from the starting point of the inspection path and the ordinate shows the temperature measured at the respective location. Above the graph the structure of the laminate is schematically shown in a section along the inspection path. The laminate comprises a wrinkle 3. As illustrated in the upper part of Figure 3 the laminate 13 is a composite material which, in case of wind turbine rotor blades, typically comprises multiple layers of fibre glass mats bonded together by some kind of resin. At the location where the inspection path 7 intersects the wrinkle 3 a temperature anomaly as compared to the surrounding laminate without wrinkles occurs. In the present example, the anomaly is a peak in the temperature measured by the thermal receiver 15, i.e. the measurement temperature is higher than the temperature measured at locations without a wrinkle.

As can intuitively be deduced from the upper part of Figure 3, the amount of resin between the fibre layers is increased in areas with wrinkles. Since the thermal properties of the resin material typically differ from the thermal properties of the fibre glass mats the thermal properties of the laminate are altered if the ratio of resin to fibre glass changes as it does at the location of a wrinkle. Hence, one observes a thermal anomaly at the location of a wrinkle.

The present invention is based on the issue that when the laminate 13 is heated or cooled for a specific and well defined amount of time, the temperature which the material reaches depends on the thermal properties of the material such as thermal conductivity and thermal capacity. Likewise, the time it takes for the material to return to ambient temperature depends on these parameters. As a consequence, a variation in the material properties of the laminate, such as the variation introduced by a wrinkle as described above, can be measured by measuring the temperature of the laminate surface along the path of heating or cooling at a specified time after heating or cooling the laminate. In this context, please note that the actual signal which can be seen in the temperature measurement along the inspection path depends on the thermal properties of the laminate to be inspected as well as on whether heating or cooling is used. Hence, the thermal anomaly measured by the thermal receiver 15 could also be a dip rather than a peak in the temperature. For example, whether the wrinkle forms a peak or dip in the temperature depends on whether the laminate cools slower or faster in an area without wrinkles or in an area with a wrinkle.

In the method of the present invention, the fact that the thermal transmitter 9 and the thermal receiver 15 are moved along the inspection path at a constant velocity results in that the laminate experiences an equal thermal influence at each section the inspection path. As also the distance between the thermal transmitter 9 and the thermal receiver 15 is fixed the time which passes between the thermal influence and the temperature measurement is constant. As a consequence, similar temperatures are measured from equal structures whereas alternating structures are detected by temperatures which considerably differ from the temperature measured in neighbouring sections of the inspection path.

Note that the temperature shown in Figure 3 is depicted in arbitrary units. This is sufficient for detecting wrinkles since the wrinkles can be detected from a comparison between the temperatures measured along the inspection path. However, if the thermal properties of the material are known it would even be possible to derive information over physical properties of a deleted wrinkle.

Although, the thermal transmitter 9 and the thermal receiver 15 are mounted to the same carrier 17 in the present embodiment this is not mandatory. It is also possible to control the movement of the transmitter 9 and the receiver 15 independently such that the distance between them if kept constant while they are moving along an inspection path.

Furthermore, instead of using a single spot pyrometer a spacially resolving pyrometer could be used, for example a pyrometer which measures temperatures along a defined line. If the measurements line extends within the inspection path it would be possible not only to detect the temperature of the laminate along the inspection path but also a temperature variation with time since the front end of the detector line passes in the location of thermal influence earlier than the aft end of the line. On the other hand, if the line is oriented perpendicular to the direction of movement along the inspection path it becomes possible to inspect a larger area with a single inspection path. If a two dimensionally resolving thermal detector is used like, e.g. an infrared camera, temperature variation with time can be measured over a larger area with a scan along a single inspection path.

An auxiliary device is provided which can be used for performing thermal scans according to the present invention. Such an auxiliary device is shown in Figures 4 to 6. The device comprises a rail or boom 21 with two feet 23 where the feet are located at opposite ends of the rail 21. The feet 23 are equipped with suction discs 25 and are connected to brackets 27 forming the ends of the rail 21 by means of two parallel arms 29. The arms 29 are pivotably connected to two spaced apart locations of the respective bracket 27 and are also pivotably connected to two spaced apart locations of the respective foot 23. Hence, the foot 23, the brackets 27 and the two arms 29 together form a four bar link, in particular a parallelogram link. The use of such a four bar link allows to vary the location and, if the brackets 27 are also pivotably linked to the rail or boom 21, the orientation of the rail with respect to the structure while the auxiliary device stays affixed to the structure to be examined.

A carrier arm 31 is movably connected to the rail 21 so as to be movable along the rail. A carrier 17 as it is shown in Figure 2 is mounted to the carrier rail 31 (not shown in Figures 4 to 6). Hence, the rail 21 of the auxiliary device, when mounted to a wind turbine rotor blade to be inspected, defines the inspection path for the thermal transmitter 9 and a thermal receiver 15. For moving the carrier arm 31 along the rail an electric motor (not shown) is present which moves the carrier arm 31 with a constant speed along the rail 21.

For performing the inventive method the auxiliary device will be affixed to the rotor blade which is to be inspected by means of the suction discs 25. Then, the orientation of the rail 21 is set by adjusting the four bar links by use of control levers 33 acting between the four bar links and certain positions of the feet 23. After fixing the rail 21 in the set position by fixing means located at the control levers 33 with the thermal transmitter 9 and the thermal receiver 15 attached to the carrier arm 31 the scan along the inspection path is performed. In case a scan along another inspection path in the same area shall be carried out the location and/or the orientation of the rail 21 is altered by manipulating the positions of the four bar links using again the control levers 33.

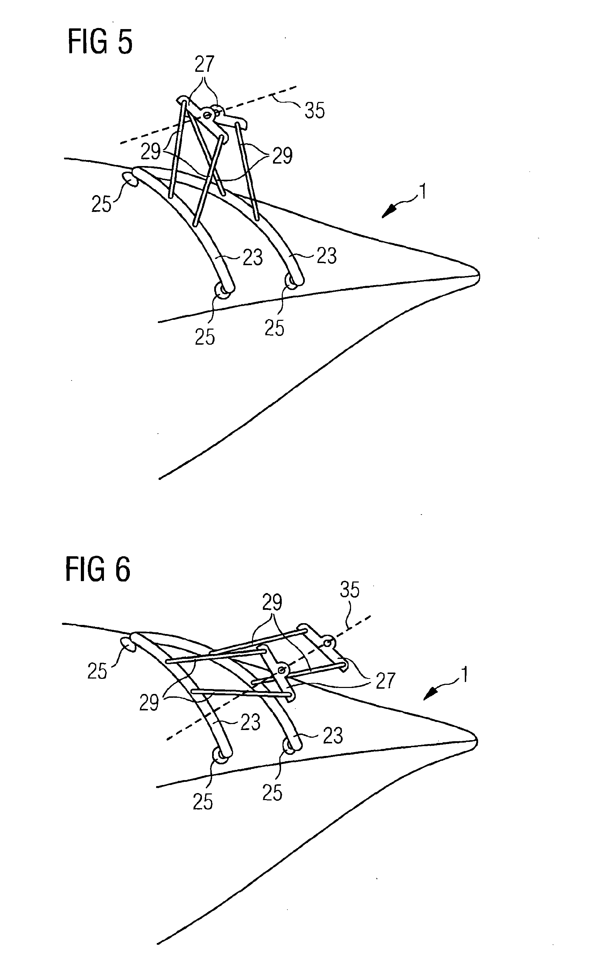

Figure 5 shows the auxiliary device fixed to a wind turbine rotor blade 1 with the rail 21 in a first position. Please note that a rail is not shown in the Figure but only indicated by the dotted line 35. Figure 6 shows the auxiliary device of Figure 5 with the rail (indicated again by the dotted line 35) in a different location and oriented parallel to the rail in the first location. If the ends of the rail 21 are connected to the brackets 27 by pivotable joints it is also possible to alter the orientation of the rail in a second position with respect to the rail in a first position. Hence, a high degree of flexibility for setting inspection paths can be provided by the auxiliary device without the necessity to dismount the device from and remount the device to the rotor blade 1.

Note that the thermal transmitter and the thermal receiver can either be mounted to the carrier arm after or before the device has been attached to the rotor blade.

The auxiliary device described with respect to Figures 4 to 6 can be used in a factory work room as well as in the field. If used in the field the auxiliary device can be lifted to a rotor blade already installed at a wind turbine by means of a nacelle crane installed on/in the nacelle of that wind turbine. Hence, by use of the auxiliary device the inventive method can be performed in the field, i.e. with rotor blades already installed to wind turbines, without dismounting the rotor blade to be inspected from the rotor hub

## Claims

1. A method of detecting wrinkles (3) in a fiber reinforced laminated structure (1) wherein
- the structure (1) is locally heated or cooled,
- the temperature of the structure (1) is measured at a measuring location being different from the location of the heating or cooling, and
- wrinkles (3) are detected from temperature anomalies found along the defined path (7) as compared to the surrounding laminate;
**characterised in that**
- the structure (1) is locally heated or cooled from the outside of the structure (1),
- the location of the heating or cooling is moved along at least two defined paths (7A, 7B) and
- the measuring location is moved along the same two defined paths (7A, 7B) as the location of the heating or cooling.

2. The method as claimed in claim 1, in which the measuring location is moved along the same path (7) as the location of the heating or cooling with a fixed distance to the location of the heating or cooling.

3. The method as claimed in claim 1 or claim 2, in which the location of the heating or cooling and/or the measuring location is/are moved with a constant speed.

4. The method as claimed in any of the claims 1 to 3, in which the at least two paths (7A, 7B)are passed after each other.

5. The method as claimed in any of the claims 1 to 3, in which the at least two paths (7A, 7B) are passed simultaneously.

6. The method as claimed in any of the claims 1 to 5, in which the temperature of the structure is measured from the outside of the structure (1).

7. The method as claimed in any of the claims 1 to 6, in which the paths are defined by a rail (21) to which a carrier arm (31) is movably connected so as to be movable along the rail (21), where a carrier (17) to which the thermal emitter (9) and the thermal receiver (15) are mounted is mounted to the carrier arm (31) and where the location of the rail (21) of the rail (21) is varied by manipulatiing two four bar links each of which being formed by a bracket (27), a foot (23) with suction discs (25) for fixing the foot to the fiber reinforced laminated structure and two arms (29) pivotably connected to spaced apart locations of the respective bracket (27) and spaced apart locations of the respective foot (23)

## Patentansprüche

1. Verfahren zum Erkennen von Falten (3) in einer faserverstärkten beschichteten Struktur (1), wobei
- die Struktur (1) lokal erwärmt oder gekühlt wird,
- die Temperatur der Struktur (1) an einem Messort gemessen wird, der von dem Ort der Erwärmung oder Kühlung verschieden ist, und
- Falten (3) durch Temperaturanomalien erkannt werden, die entlang des definierten Weges (7) beim Vergleich mit dem umgebenden Laminat gefunden werden;
**dadurch gekennzeichnet, dass**
- die Struktur (1) von der Außenseite der Struktur (1) her lokal erwärmt oder gekühlt wird,
- der Ort der Erwärmung oder Kühlung entlang von wenigstens zwei definierten Wegen (7A, 7B) bewegt wird, und
- der Messort entlang derselben zwei definierten Wege (7A, 7B) bewegt wird wie der Ort der Erwärmung oder Kühlung.

2. Verfahren nach Anspruch 1, wobei der Messort entlang desselben Weges (7) bewegt wird wie der Ort der Erwärmung oder Kühlung, mit einem festen Abstand zu dem Ort der Erwärmung oder Kühlung.

3. Verfahren nach Anspruch 1 oder Anspruch 2, wobei der Ort der Erwärmung oder Kühlung und/oder der Messort mit einer konstanten Geschwindigkeit bewegt wird/werden.

4. Verfahren nach einem der Ansprüche 1 bis 3, wobei die wenigstens zwei Wege (7A, 7B) nacheinander durchlaufen werden.

5. Verfahren nach einem der Ansprüche 1 bis 3, wobei die wenigstens zwei Wege (7A, 7B) gleichzeitig durchlaufen werden.

6. Verfahren nach einem der Ansprüche 1 bis 5, wobei die Temperatur der Struktur von der Außenseite der Struktur (1) her gemessen wird.

7. Verfahren nach einem der Ansprüche 1 bis 6, wobei die Wege durch eine Schiene (21) definiert werden, mit welcher ein Trägerarm (31) beweglich verbunden ist, so dass er entlang der Schiene (21) bewegbar ist, wobei ein Träger (17), an welchem der Wärmestrahler (9) und der Wärmeempfänger (15) angebracht sind, an dem Trägerarm (31) angebracht ist, und wobei der Ort der Schiene (21) variiert wird, indem zwei aus vier Stäben bestehende Verbindungsglieder gehandhabt werden, von denen jedes von einem Bügel (27), einem Fuß (23) mit Saugnäpfen (25) zum Befestigen des Fußes an der faserverstärkten beschichteten Struktur und zwei Armen (29), die schwenkbar mit voneinander beabstandeten Orten des jeweiligen Bügels (27) und voneinander beabstandeten Orten des jeweiligen Fußes (23) verbunden sind, gebildet wird.

## Revendications

1. Procédé pour détecter des plis (3) dans une structure stratifiée (1) renforcée par fibres, dans lequel
- la structure (1) est chauffée ou refroidie localement,
- la température de la structure (1) est mesurée au niveau d'une position de mesure différente de la position de chauffage ou de refroidissement, et
- des plis (3) sont détectés à partir d'anomalies de température trouvées le long de la trajectoire définie (7) par rapport au stratifié qui l'entoure ;
**caractérisé en ce que**
- la structure (1) est chauffée ou refroidie localement depuis l'extérieur de la structure (1),
- la position de chauffage ou de refroidissement est déplacée le long d'au moins deux trajectoires définies (7A, 7B) et
- la position de mesure est déplacée le long des deux mêmes trajectoires (7A, 7B) que la position de chauffage ou de refroidissement.

2. Procédé selon la revendication 1, dans lequel la position de mesure est déplacée le long de la même trajectoire (7) que la position de chauffage ou de refroidissement, à une distance fixe de la position de chauffage ou de refroidissement.

3. Procédé selon la revendication 1 ou la revendication 2, dans lequel la position de chauffage ou de refroidissement et/ou la position de mesure est/sont déplacée/s à une vitesse constante.

4. Procédé selon l'une quelconque des revendications 1 à 3, dans lequel les au moins deux trajectoires (7A, 7B) sont suivies l'une après l'autre.

5. Procédé selon l'une quelconque des revendications 1 à 3, dans lequel les au moins deux trajectoires (7A, 7B) sont suivies simultanément.

6. Procédé selon l'une quelconque des revendications 1 à 5, dans lequel la température de la structure est mesurée depuis l'extérieur de la structure (1).

7. Procédé selon l'une quelconque des revendications 1 à 6, dans lequel les trajectoires sont définies par un rail (21) auquel un bras de support (31) est relié de manière mobile de manière à pouvoir être déplacé le long du rail (21), un support (17) sur lequel sont montés l'émetteur thermique (9) et le récepteur thermique (15) étant monté sur le bras de support (31) et la position du rail (21) du rail (21) étant modifiée en manipulant deux liaisons à quatre articulations dont chacune est formée par une bride (27), un pied (23) pourvu de ventouses (25) pour fixer le pied sur la structure stratifiée renforcée par fibres et deux bras (29) reliés de manière pivotante à des emplacements de la bride respective (27) situés à une distance l'un de l'autre et à des emplacements du pied respectif (23) situés à une distance l'un de l'autre.
